# EUROPEAN PATENT SPECIFICATION

(11) **EP 1 626 548 B1**
(45) Date of publication and mention of the grant of the patent: **17.07.2013**
(21) Application number: 04715872.0
(22) Date of filing: 01.03.2004
(51) Int. Cl.: H04M 3/00, H04M 11/06, H04L 5/06, H04L 5/02

(54) **PROCESSING APPARATUS OF BROADBAND AND NARROWBAND SERVICES IN A COMMUNICATION DEVICE AND METHOD THEREOF**
VERARBEITUNGSVORRICHTUNG VON BREITBAND- UND SCHMALBANDDIENSTEN IN EINER KOMMUNIKATIONSEINRICHTUNG UND VERFAHREN DAFÜR
APPAREIL DE TRAITEMENT DE SERVICES LARGE BANDE ET BANDE ETROITE DANS UN DISPOSITIF DE COMMUNICATIONS, ET PROCEDE CORRESPONDANT

(30) Priority: 12.05.2003 CN 03131114
(43) Date of publication of application: 15.02.2006
(73) Proprietor: Huawei Technologies Co., Ltd., Shenzhen, Guangdong Province 518129 (CN)
(72) Inventor: HUANG, Ming, Shenzhen Guangdong 518129 (CN)
(74) Representative: Isarpatent
(86) International application number: PCT/CN2004/000157
(87) International publication number: WO 2004/100476

(56) References cited:
- EP-A- 1 207 673
- WO-A-00/74280
- CN-A- 1 352 501
- CN-A- 1 359 224
- US-A- 6 067 316
- US-B1- 6 477 249

## Description

### Field of the Invention

The present invention relates to communication technology field, especially to a broadband and narrowband service processing apparatus in communication equipment and its implementation method.

### Background of the Invention

In the communication technology field, as communication technology develops, widespread use of broadband services becomes a certainty, and the advantages of broadband transmission are known to all. Notwithstanding this, in consideration of the benefits of operators and people's habits, broadband services have to coexist with legacy narrowband services in the existing communication networks. Therefore, it is a new challenge to implement a method and/or an apparatus that can process both broadband and narrowband services simultaneously in a communication system.

Presently, in communication systems, broadband and narrowband services are provided simultaneously through copper twisted pairs to subscribers; the broadband service includes Asymmetric Digital Subscriber Loop (ADSL) Service and Very-high-speed Digital Subscriber Loop (VDSL) Service, etc., which are called collectively as XDSL services; and the narrowband service includes Plain Old Telephone Service (POTS) and Integrated Service Digital Network (ISDN), etc. There are several cases in which broadband and narrowband services can be processed simultaneously in a communication network: ADSL over POTS, ADSL over ISDN, VDSL over POTS, and VDSL over ISDN, etc.

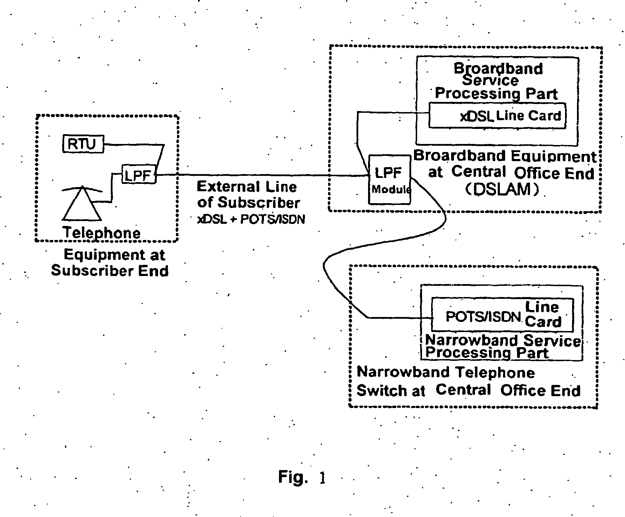

The fundamental principle of the cases in which broadband and narrowband services can be processed simultaneously is shown in Fig. 1; in a copper twisted pair that is used as the external line of subscriber, broadband service signal (i.e., high frequency XDSL signal) and narrowband service signal (i.e., low frequency POTS/ISDN signal) coexist with each other.

In the equipment at central office end, there is a Low-Pass Filter (LPF) module and a High-Pass Filter (HPF) module, which filter mixed signal in the external line of subscriber to separate high-frequency signal and low-frequency signal from each other and transmit them to the respective processing modules; the LPF module and the HPF module usually comprises multiple LPFs and multiple HPFs respectively; one LPF and one HPF cooperate with each other to process one channel of the mixed signal in the external line of subscriber. The LPF separates out the narrowband service POTS/ISDN signal and sends it to the port of POTS/ISDN line card in the narrowband telephone switch at central office end for service processing; and the HPF separates out XDSL signal and sends it to the port of XDSL line card in a Digital Subscriber Line Access Multiplexer (DSLAM) (broadband equipment at central office end) for service processing. The HPF circuit is usually built in the XDSL line card, as shown in Fig.1.

In the equipment at subscriber end, the narrowband signal separated out by the LPF module is sent to the subscriber's telephone, and the XDSL signal is sent to the Remote Terminal Unit (RTU), which has a HPF module designed to filter off low frequency POTS/ISDN signal and perform service processing on the high frequency XDSL signal.

Corresponding to each copper twisted pair connected to the equipment at subscriber end, there is one LPF and one port of service processing portion for low frequency POTS/ISDN signal as well as one HPF and one port of service processing portion for XDSL signal. As shown in Fig.1, the DSLAM comprises multiple separate LPF modules and XDSL line cards; wherein, each LPF module corresponds to one XDSL line card, and each LPF module or XDSL line card is separately inserted into the corresponding slot in the DSLAM and thus occupies one slot. Each LPF module and its corresponding XDSL line card can be connected to,multiple subscribers; for example, one LPF module and XDSL line card comprising 32 circuits can be connected to 32 equipments at subscriber end. The separate LPF modules and the XDSL line cards are connected through cable, and the LPF modules and the POTS/ISDN line cards are also connected through cable; said cable comprises multiple copper twisted pairs which, in the case of 32-channel LPF modules and XDSL line cards, are 32 copper twisted pairs.

Therefore, in the DSLAM, due to the fact that each LPF module or XDSL line card occupies one slot in the frame of the DSLAM, the maximum number of the subscriber access ports can be provided by the DSLAM in the communication system is reduced significantly, i.e., the capacity of the DSLAM in the system is reduced. In addition, in the DSLAM, it is required for each LPF module and the XDSL line card to be connected through a cable, causing a large amount of cables and connectors to be used, and increasing the complexity in implementing DSLAM and the cost of the same; even if each LPF module and the XDSL line card are connected through the wiring on a PCB (Printed Circuit Board), the implementing cost will also be increased due to the use of a large amount of connectors, and at the same time, the complexity in wiring on the PCB will be increased greatly.
WO-A-0074280 discloses an ADSL solution that integrates all three functions (splitter 103, data 107 and voice 106) on to a single LIC (Line Interface Card), in which the real estate efficiency within the edge node can be increased and the hardware costs per ADSL port can be reduced.
US-A-6067316 discloses a similar solution to WO-A-0074280. The main difference between the two solutions is in that the circuits for the data channel and the voice channel are separate from each other in WO-A-0074280, while in US-A-6067316, the data channel and the voice channel use the same circuit, for example, the same A/D converter and the same D/A converter.
Furthermore, EP-A-1207637 provides support for symmetrical xDSL services, ADSL services and POTS service from a single line card, thus reducing cost and saving space in telecommunications system. In the case of supporting ADSL services and POTS service substantially concomitantly, the solution is also similar to that disclosed in WO-A-0074280.
However, traditional narrowband telephone switch devices for POTS/ISDN services have already been installed to a great extent, as a result of about 30 years' development. In this situation, if a line card with integrated splitter, voice and xDSL interfaces is used to develop xDSL over POTS/ISDN services so as to save space and reduce costs, an existing narrowband telephone switch device will have to be removed, thereby resulting in unnecessary waste of resources and being limited in further reduction of costs.

In view of above problems in the prior art, it is an object of the present invention to provide a broadband and narrowband service processing apparatus in communication equipment and its implementation method, such that the existing narrowband telephone switch device can be utilized instead of being removed when developing xDSL over POTS/ISDN services, so as to save resources and thus further reduce costs.

In accordance with the present invention, this object is solved by providing a communication system of broadband and narrowband signal processing for communications service, as defined in independent claim 1.

According to a preferred embodiment, the BSLC occupies one single card slot of the equipment.

According to a preferred embodiment, the LPF and HPF modules are connected through wiring on BSLC printed circuit board.

According to a preferred embodiment, one or more LPF modules are arranged to filter of a broadband service signal part as provided in the transmission line and output a narrowband service signal; and one or more HPF modules are arranged to filter off a narrowband service signal part as provided in the transmission line and output a broadband service signal.

According to a preferred embodiment, one LPF cooperates with one HPF to process one channel of the mixed signal comprising broadband service signal and narrowband service signal.

According to a preferred embodiment, the number of low-pass/high-pass filter pairs equals 32.

According to a preferred embodiment, the LPF, HPF modules and the broadband service line card, BSLC, are disposed in a Digital Subscriber Line Access Multiplexer, DSLAM.

According to a preferred embodiment, the broadband service line card, BSLC, is an xDSL line card.

According to a preferred embodiment, said HPF module is connected with the xDSL service signalprocessing module through wiring on a printed circuit board.

In accordance with the present invention, the above explained object is also solved by means of a method of implementing broadband and narrowband service processing in communications equipment, characterized by providing LPF, HPF and broadband service signal processing modules in the communications equipment; disposing the LPF, HPF and broadband service signal processing modules on one and the same first line card in said communication equipment, the service signal processing of the first line card being dedicated for broadband service signal processing; arranging the LPF and HPF modules to comprise an equal number of low-pass filters, LPFs, and high-pass filters, HPFs, in pairs; determining the number of high-pass/low-pass filter pairs to correspond to number of subscriber circuits; and connecting the HPF module with the broadband service signal processing module; connecting the LPF module of the first line card with the narrowband service signal processing module of a second line card in the communications equipment, the service signal processing of the second line card being dedicated for narrowband service signal processing; connecting the narrowband service signal processing module through an external cable and connector, connecting one or more LPF modules to the first line card through a wiring on a printed circuit board - PCB.

According to a preferred embodiment, the method comprises arranging the first line card to occupy a single card slot of the equipment.

According to a preferred embodiment, said broadband service includes at least one of Asymmetric Digital Subscriber Loop, ADSL, service, Very-high-speed Digital 5 Subscriber Loop, VDSL, service, ADSL+ service, ADSL2 service, and ADSL2+ service; and said narrowband service includes at least one of POTS service and ISDN service.

It can be seen from above technical solution provided by the present invention that, since the present invention employs a structure to develop xDSL over PORTS/ISDN services, in which the LPF module and the HPF module are integrated with the XDSL line card in the DSLAM, while the POTS/ISDN line card is disposed in the existing narrowband telephone switch, such that the existing narrowband telephone switch need not to be removed and can still be used to provide narrowband services, the resources are saved and thus the costs are further reduced significantly. In addition, due to the fact that the broadband devices and narrowband devices can be bought separately and thus the broadband network and narrowband network can be constructed separately, the construction of the telecommunications network by the carriers can be more flexible.

### Brief Description of the Drawings

Fig. 1 is a structural representation of a broadband and narrowband service processing apparatus in the prior art;

Fig. 2 is a network topology diagram of a broadband and narrowband service processing apparatus according to an embodiment of the present invention;

Fig. 3 is a structural representation of the XDSL line card shown in Fig.2.

### Detailed Description of the Embodiments

In a communication system, the broadband and narrowband service processing apparatus for processing broadband and narrowband service signal transmitted in the external line of subscriber usually comprises LPF (Low-Pass Filter) module and HPF (High-Pass Filter) module, and broadband service signal processing module and narrowband service signal processing module, respectively, in the broadband service processing part and the narrowband service processing part. The method of implementing the broadband and narrowband service processing apparatus in the communication system according to an embodiment of the present invention comprises: disposing the LPF module and the HPF module of the broadband and narrowband service processing apparatus on one and the same line card that only occupies one slot in the communication equipment, so as to ensure that only one slot in the communication equipment is needed to be occupied in the case that the narrowband service processing module is disposed externally to the communication equipment; the LPF module and the HPF module are designed to separate out broadband service signal and narrowband service signal in one and the same transmission line; wherein: the LPF module is designed to filter off broadband service signal in the transmission line and output narrowband service signal to the narrowband service signal processing module in the narrowband service processing part; the narrowband service signal processing module may be built in the communication equipment or external to the communication equipment; the HPF module is designed to filter off narrowband service signal in the transmission line and output broadband service signal to the broadband service signal processing module in the broadband service processing part. The present invention significantly increases the number of broadband and narrowband service processing apparatuses that can be inserted in the communication equipment, i.e., the number of the equipments at subscriber end that could be supported by single communication equipment at central office end, DSLAM.

The line card is a broadband service line card that contains a broadband service signal processing module in the communication equipment, the broadband service line card is designed to process broadband service signal transmitted in the external line of subscriber; the broadband service line card can be a XDSL (X Digital Subscriber Loop) line card in the current broadband equipment at central officeend.

The broadband service according to the.embodiment of the present invention includes: ADSL (Asymmetric Digital Subscriber Loop) service, VDSL (Very-high-speed Digital Subscriber Loop) service, ADSL+ service, ADSL2/ADSL2+ service, etc.;

the narrowband service according to the embodiment of the present invention includes: POTS service and ISDN service, etc.

Therefore, the method according to the embodiment of the present invention can be applied to the communication equipment that provides ADSL over POTS service, and/or ADSL over ISDN service, and/or VDSL over POTS service, and/or VDSL over ISDN service, etc.

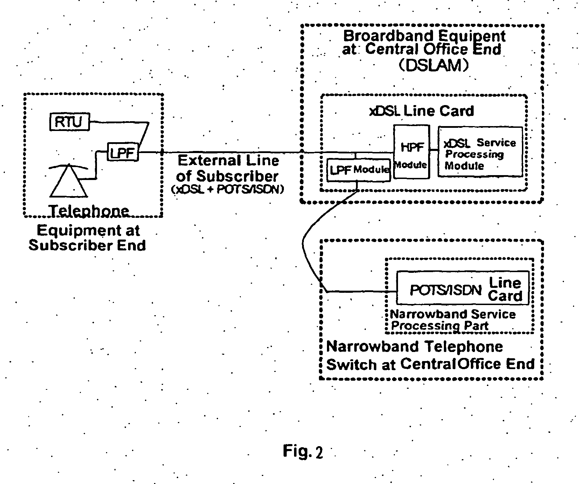

On the basis of the above method, the present invention also provides a broadband and narrowband service processing apparatus in communication equipment, the structure of which is shown in Fig.2, comprising: LPF module, HPF module, broadband service line card, and narrowband service line card; the LPF module and the HPF module being built in the broadband service line card, and the LPF module being connected with the narrow band service line card containing a narrowband service signal processing module, through the external cable and the connector; the broadband service line card being in the broadband equipment at central office end, DSLAM, and occupying one slot in the broadband equipment at central office end, for processing broadband service signal in the communication system; the LPF module and the HPF module, respectively, processing the mixed signal in the external line of subscriber directly ; the LPF and the HPF are connected with the external line of subscriber at a combined connecting point; the other end of the external line of subscriber is connected the equipment at subscriber end.

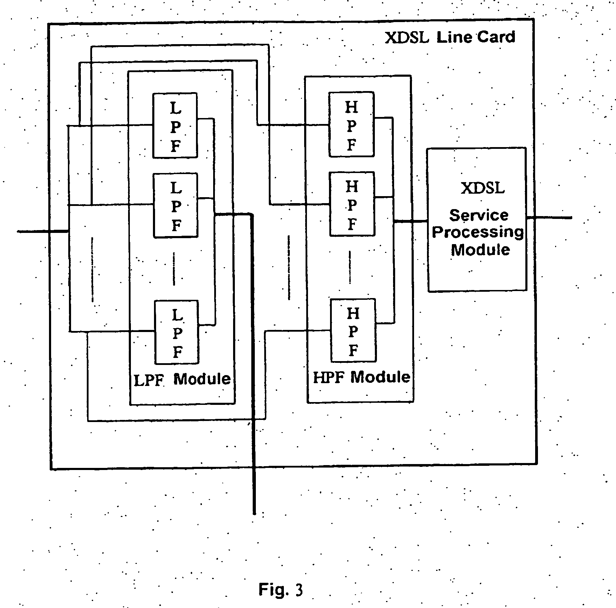

In above apparatus, if the broadband service line card is a XDSL line card and the narrowband service line card is a POTS/ISDN line card, the HPF module is connected with the XDSL service processing module in the XDSL line card, as shown in Fig.3; the LPF module and the HPF module in the apparatus process the mixed signal comprising broadband service signal and narrowband service signal i.e., XDSL signal and POTS/ISDN signal, respectively, in the external line of subscriber; wherein: the LPF module processes the mixed signal through low-pass filtering to obtain low frequency POTS/ISDN signal (i.e., narrowband service signal) and transmits the signal obtained through the cable to the POTS/ISDN line card for processing; the HPF module processes the mixed signal through high-pass filtering to obtain the high frequency XDSL signal (i.e., broadband service signal) and transmits the signal obtained within the XDSL line card to the XDSL service processing module for processing; each LPF and HPF being connected in Fig.3 cooperates with each other to process each channel of the mixed signal, each channel of the signal corresponding to a subscriber terminal.

In the present invention, it is unnecessary to modify the design of the existing LPF module and the modules in the XDSL line card due to the fact that the XDSL line card in the existing communication equipment has enough slots to accommodate additional LPF modules; therefore, through simply disposing the LPF module in the XDSL line card and carrying out the respective connection for the LPF module and the HPF module on a PCB in a manner as shown in Fig.3, the LPF module can be built in the XDSL line card, so as to save the slots in the communication equipment occupied originally by the LPF module, and thereby enable the communication equipment to accommodate more XDSL line cards and provide more subscriber access ports.

## Claims

1. A communication system of broadband and narrowband signal processing for communications service, comprising a low-pass filter, LPF, module, a high-pass filter, HPF module, a broadband service line card, BSLC, a broadband service signal processing module, a narrowband service line card, NSLC, and a narrowband service signal processing module,
**characterized by** said LPF module , HPF module and said broadband service signal processing module being arranged in the same BSLC, the service signal processing of the BSLC being dedicated for broadband service signal processing,
said narrowband service signal processing module being separate from the broadband service signal processing module and connected with the broadband service signal processing module through external cable and connector,
wherein the number of low-pass filters, LPFs, in the LPF module is equal to the number of high-pass filters, HPFs, in the HPF module, the LPFs and HPFs being arranged in pairs,
and
wherein the number of high-pass/low-pass filter pairs corresponds to the number of subscriber circuits;
wherein the narrowband service signal processing module is arranged in the narrowband service line card, NSLC, and the service signal processing of the NSLC being dedicated for narrowband service signal processing; and
wherein one or more LPF modules are connected in the BSLC through a wiring on a printed circuit board, PCB.

2. The communication system according to claim 1.
wherein the BSLC occupies one single card slot of the equipment.

3. The communication system according to claim 1,
wherein the LPF and HPF modules are connected through wiring on BSLC, printed circuit board.

4. The communication system according to claim 1,
wherein one or more LPF modules are arranged, to filter off a broadband service signal part as provided in the transmission line and output a narrowband service signal; and
one or more HPF modules are arranged to filter off a narrowband service signal part as provided in the transmission line and output a broadband service signal.

5. The communication system according to claim 1,
wherein one LPF cooperates with one HPF to process one channel of the mixed signal comprising broadband service signal and narrowband service signal.

6. The communication system according to claim 1,
wherein the number of low-pass/high-pass filter pairs equals 32.

7. The communication system according to claim 1 comprising the LPF, HPF modules and the broadband service line card, BSLC, are disposed in a Digital Subscriber Line Access Multiplexer, DSLAM.

8. The communication system according to claim 1 comprising the broadband service line card, BSLC, is an xDSL line card.

9. The communication system according to claim 7,
wherein said HPF module is connected with the xDSL service signal processing module through wiring on a printed circuit board.

10. A method of implementing broadband and narrowband service processing in a communications equipment, **characterized by**:
providing Low-Pass Filter, LPF, High-Pass Filter, HPF and broadband service signal processing modules in the communications equipment;
disposing the LPF, HPF and broadband service signal processing modules on one and the same first line card in said communication equipment, the service signal processing of the first line card being dedicated for broadband service signal processing
arranging the LPF and HPF modules to comprise an equal number of low-pass filters, LPFs, and high-pass filters, HPFs, in pairs;
determining the number of high-pass/low-pass filter pairs to correspond to number of subscriber circuits; and
connecting the HPF module with the broadband service signal processing module:
connecting the LPF module of the first line card with the narrowband service signal processing module of a second line card in the communications equipment, the service signal processing of the second line card being dedicated for narrowband service signal processing:
connecting the narrowband service signal processing module through an external cable and connector,
connecting one or more LPF modules to the first line card through a wiring on a printed circuit board - PCB.

11. The method according to claim 10, comprising
arranging the first line card to occupy a single card slot of the equipment.

12. The method according to claim 10, wherein
said broadband service includesat least one of Asymmetrie Digital Subscriber Loop, ADSL, service, Very-high-speed Digital 5 Subscriber Loop, VDSL, service, ADSL+ service, ADSL2 service, and ADSL2+ service;and said narrowband service includes at least one of POTS service and ISDN service.

## Patentansprüche

1. Kommunikationssystem mit Breitband- und Schmalband-Signalverarbeitung für einen Kommunikationsdienst, mit einem LPF (low pass filter - Tiefpassfilter)-Modul, einem HPF (high pass filter - Hochpassfilter)-Modul, einer Breitbanddienst-Leitungskarte, BSLC, einem Breitbanddienst-Signalverarbeitungsmodul, einer Schmalbanddienst-Leitungskarte, NSLC, und einem Schmalbanddienst-Signalverarbeitungsmodul,
**dadurch gekennzeichnet, dass** das LPF-Modul, das HPF-Modul und das Breitbanddienst-Signalverarbeitungsmodul auf derselben BSLC angeordnet sind, wobei die Dienst-Signalverarbeitung der BSLC der Breitbanddienst-Signalverarbeitung gewidmet ist,
wobei das Schmalbanddienst-Signalverarbeitungsmodul von dem Breitbanddienst-Signalverarbeitungsmodul getrennt ist und mit dem Breitbanddienst-Signalverarbeitungsmodul durch ein externes Kabel und einen externen Verbinder verbunden ist,
wobei die Anzahl von Tiefpassfiltern, LPF, in dem LPF-Modul gleich der Anzahl von Hochpassfiltern, HPF, in dem HPF-Modul ist, wobei die LPF und die HPF paarweise angeordnet sind, und
wobei die Anzahl von Hochpassfilter-/Tiefpassfilter-Paaren der Anzahl von Teilnehmerschaltungen entspricht;
wobei das Schmalbanddienst-Signalverarbeitungsmodul in der Schmalbanddienst-Leitungskarte, NSLC, angeordnet ist und die Dienstsignalverarbeitung der NSLC der Schmalbanddienst-Signalverarbeitung gewidmet ist; und
wobei ein oder mehrere LPF-Module mit der BSLC über eine Verdrahtung auf einer gedruckten Leiterplatte, PCB, verbunden sind.

2. Kommunikationssystem nach Anspruch 1,
wobei die BSLC einen einzigen Kartenschlitz der Anlage belegt.

3. Kommunikationssystem nach Anspruch 1,
wobei das LPF- und das HPF-Modul durch Verdrahtung auf einer gedruckten BSLC-Leiterplatte verbunden sind.

4. Kommunikationssystem nach Anspruch 1,
wobei ein oder mehrere LPF-Module dafür ausgelegt sind, einen Breitbanddienst-Signalanteil, der in der Übertragungsleitung bereitgestellt wird, herauszufiltern und ein Schmalbanddienst-Signal auszugeben; und
wobei ein oder mehrere HPF-Module dafür ausgelegt sind, einen Schmalbanddienst-Signalanteil, der in der Übertragungsleitung bereitgestellt wird, herauszufiltern und ein Breitbanddienst-Signal auszugeben.

5. Kommunikationssystem nach Anspruch 1,
wobei ein LPF mit einem HPF zusammenwirkt, um einen Kanal des gemischten Signals, das ein Breitbanddienst-Signal und ein Schmalbanddienst-Signal umfasst, zu verarbeiten.

6. Kommunikationssystem nach Anspruch 1,
wobei die Anzahl von Tiefpassfilter-/Hochpassfilter-Paaren gleich 32 ist.

7. Kommunikationssystem nach Anspruch 1,
wobei die LPF- und HPF-Module und die Breitbanddienst-Leitungskarte, BSLC, in einem Zugangsmultiplexer einer digitalen Teilnehmerleitung, DSLAM, angeordnet sind.

8. Kommunikationssystem nach Anspruch 1,
wobei die Breitbanddienst-Leitungskarte, BSLC, eine xDSL-Leitungskarte ist.

9. Kommunikationssystem nach Anspruch 7,
wobei das HPF-Modul mit dem xDSL-Dienst-Signalverarbeitungsmodul über eine Verdrahtung auf einer gedruckten Leiterplatte verbunden ist.

10. Verfahren zum Implementieren einer Breitband- und einer Schmalband-Dienstverarbeitung in einem Kommunikationsgerät, **gekennzeichnet durch**:
Bereitstellen eines Tiefpassfilter-Moduls, LPF-Moduls, eines Hochpassfilter-Moduls, HPF-Moduls, und eines Breitbanddienst-Signalverarbeitungsmoduls in dem Kommunikationsgerät;
Anordnen der LPF-, HPF- und Breitbanddienst-Signalverarbeitungsmodule auf derselben ersten Leitungskarte in der Kommunikationsanlage, wobei die Dienstsignalverarbeitung der ersten Leitungskarte der Breitbanddienst-Signalverarbeitung gewidmet ist;
Anordnen der LPF- und HPF-Module in der Weise, dass sie paarweise die gleiche Anzahl von Tiefpassfiltern, LPF, und Hochpassfiltern, HPF, enthalten;
Bestimmen der Anzahl von Hochpassfilter-/Tiefpassfilter-Paaren, damit sie der Anzahl von Teilnehmerschaltungen entsprechen; und
Verbinden des HPF-Moduls mit dem Breitbanddienst-Signalverarbeitungsmodul;
Verbinden des LPF-Moduls der ersten Leitungskarte mit dem Schmalbanddienst-Signalverarbeitungsmodul einer zweiten Leitungskarte in dem Kommunikationsgerät, wobei die Dienstsignalverarbeitung der zweiten Leitungskarte der Schmalbanddienst-Signalverarbeitung gewidmet ist;
Verbinden des Schmalbanddienst-Signalverarbeitungsmoduls über ein externes Kabel und einen externen Verbinder;
Verbinden eines oder mehrerer LPF-Module mit der ersten Leitungskarte über eine Verdrahtung auf einer gedruckten Leiterplatte, PCB.

11. Verfahren nach Anspruch 10, das Folgendes umfasst:
Anordnen der ersten Leitungskarte, damit sie einen einzigen Kartenschlitz des Geräts belegt.

12. Verfahren nach Anspruch 10, wobei
der Breitbanddienst wenigstens einen Dienst mit asymmetrischer digitaler Teilnehmerschleife, ADSL-Dienst, einen Dienst mit digitaler 5-Teilnehmerschleife mit sehr hoher Geschwindigkeit, VDSL-Dienst, einen ADSL+-Dienst, einen ADSL2-Dienst und/oder einen ADSL2+-Dienst umfasst; und
der Schmalbanddienst einen POTS-Dienst und/oder einen ISDN-Dienst umfasst.

## Revendications

1. Système de communications de traitement de signaux à large bande et à bande étroite pour service de communications, comportant un module de filtres passe-bas, LPF, un module de filtres passe-haut, HPF, une carte de ligne pour service à large bande, BSLC, un module de traitement de signaux pour service à large bande, une carte de ligne pour service à bande étroite, NSLC, et un module de traitement de signaux pour service à bande étroite,
**caractérisé en ce que** ledit module de LPF, ledit module de HPF et ledit module de traitement de signaux pour service à large bande sont disposés dans la même BSLC, le traitement de signaux de service de la BSLC étant dédié au traitement de signaux pour service à large bande,
ledit module de traitement de signaux pour service à bande étroite étant distinct du module de traitement de signaux pour service à large bande et relié au module de traitement de signaux pour service à large bande par l'intermédiaire d'un câble et d'un connecteur externes,
le nombre de filtres passe-bas, LPF, dans le module de LPF étant égal au nombre de filtres passe-haut, HPF, dans le module de HPF, les LPF et les HPF étant disposés par paires, et
le nombre de paires filtre passe-haut / filtre passe-bas correspondant au nombre de circuits d'abonné ;
le module de traitement de signaux pour service à bande étroite étant disposé dans la carte de ligne pour service à bande étroite, NSLC, et le traitement de signaux de service de la NSLC étant dédié au traitement de signaux pour service à bande étroite ; et
un ou plusieurs modules de LPF étant raccordés dans la BSLC par l'intermédiaire d'un câblage sur une carte à circuit imprimé, PCB.

2. Système de communications selon la revendication 1,
la BSLC occupant un seul emplacement de carte de l'équipement.

3. Système de communications selon la revendication 1,
les modules de LPF et de HPF étant raccordés par l'intermédiaire d'un câblage sur la carte à circuit imprimé de la BSLC.

4. Système de communications selon la revendication 1,
un ou plusieurs modules de LPF étant configurés pour éliminer par filtrage une partie de signal de service à large bande tel que présent sur la ligne de transmission et délivrer un signal de service à bande étroite ; et
un ou plusieurs modules de HPF étant configurés pour éliminer par filtrage une partie de signal de service à bande étroite tel que présent sur la ligne de transmission et délivrer un signal de service à large bande.

5. Système de communications selon la revendication 1,
un LPF coopérant avec un HPF pour traiter un canal du signal mixte comportant un signal de service à large bande et un signal de service à bande étroite.

6. Système de communications selon la revendication 1,
le nombre de paires filtre passe-bas / filtre passe-haut valant 32.

7. Système de communications selon la revendication 1, **caractérisé en ce que** les modules de LPF, de HPF et la carte de ligne pour service à large bande, BSLC, sont disposés dans un Multiplexeur d'accès de ligne d'abonné numérique, DSLAM.

8. Système de communications selon la revendication 1, **caractérisé en ce que** la carte de ligne pour service à large bande, BSLC, est une carte de ligne xDSL.

9. Système de communications selon la revendication 7,
ledit module de HPF étant relié au module de traitement de signaux pour service xDSL par l'intermédiaire d'un câblage sur une carte à circuit imprimé.

10. Procédé de mise en oeuvre d'un traitement pour service à large bande et à bande étroite dans un équipement de communications, **caractérisé par** les étapes consistant à:
mettre en place des modules de filtres passe-bas, LPF, de filtres passe-haut, HPF, et
de traitement de signaux pour service à large bande dans l'équipement de communications ;
disposer les modules de LPF, de HPF et de traitement de signaux pour service à large bande sur une seule et même première carte de ligne dans ledit équipement de communications, le traitement de signaux de service de la première carte de ligne étant dédié au traitement de signaux pour service à large bande ;
disposer les modules de LPF et de HPF de façon à comporter un nombre égal de filtres passe-bas, LPF, et de filtres passe-haut, HPF, par paires ;
déterminer le nombre de paires filtre passe-haut / filtre passe-bas de façon à correspondre au nombre de circuits d'abonné ; et
relier le module de HPF au module de traitement de signaux pour service à large bande ;
relier le module de LPF de la première carte de ligne au module de traitement de signaux pour service à bande étroite d'une deuxième carte de ligne dans l'équipement de communications, le traitement de signaux de service de la deuxième carte de ligne étant dédié au traitement de signaux pour service à bande étroite ;
relier le module de traitement de signaux pour service à bande étroite par l'intermédiaire d'un câble et d'un connecteur externes ;
relier un ou plusieurs modules de LPF à la première carte de ligne par l'intermédiaire d'un câblage sur une carte à circuit imprimé, PCB.

11. Procédé selon la revendication 10, comportant une étape consistant à disposer la première carte de ligne de façon à occuper un seul emplacement de carte de l'équipement.

12. Procédé selon la revendication 10,
ledit service à large bande comprenant au moins un service parmi un service de raccordement d'abonné numérique asymétrique, ADSL, un service de raccordement d'abonné numérique à très haut débit, VDSL, un service ADSL+, un service ADSL2 et un service ADSL2+ ; et ledit service à bande étroite comprenant au moins un service parmi un service téléphonique classique et un service de RNIS.
